# EUROPEAN PATENT APPLICATION

(11) **EP 4 617 551 A1**
(43) Date of publication of application: **17.09.2025**
(21) Application number: 24162972.4
(22) Date of filing: 12.03.2024
(51) Int. Cl.: F16M 11/28, F16B 7/10, F16M 13/02

(54) **AN APPARATUS CEILING MOUNT**

(71) Applicant: Koninklijke Philips N.V., 5656 AG Eindhoven (NL)
(72) Inventor: MANGU, Atish Deepak, Eindhoven (NL); VAN WEERT, René, Eindhoven (NL)
(74) Representative: Philips Intellectual Property & Standards

(57) **Abstract**

An apparatus ceiling mount (10) comprises a telescopic arm having an adjustable length and a frame (5) attached to its lower end. The arm comprises a group of slideably coupled parts including at least an upper end part (20) and a lower end part (30). All parts are slideably coupled to its neighboring part. The upper end part is attachable to a ceiling (15). An apparatus (6,7) may be attached to the frame. Further the apparatus ceiling mount comprises a cable (55) coupled with one end to the lower end part and the other end to an adjustable constant force spring (50) which is coupled to the upper end part. The gravity force acting on the apparatus is counterbalanced by the force provided by the adjustable constant force spring.

## Description

### FIELD OF THE INVENTION

This invention relates to a ceiling mount for an apparatus.

### BACKGROUND OF THE INVENTION

An example of an apparatus that may be carried by an apparatus ceiling mount is a monitor. Ceiling mounted monitors are used in situations where no table space is available such as for example in a catheterization laboratory commonly referred to as a cath lab. A cath lab is an examination room in a hospital or clinic with diagnostic imaging equipment that may be used in an interventional procedure to visualize arteries and navigate a treatment device in the artery to a target location. During the interventional procedure a surgical display is used to show the X ray images and other critical inputs needed by the physicians. This requires a relatively large display (for example 58") or several smaller displays (for example 2 x 27") to be attached to a ceiling mount. To enable an adjustment of the monitor height with minimal effort a motorized monitor ceiling mount may be used.

A disadvantage of a motorized apparatus ceiling mount may be that the speed of the up and down movement is relatively low. There is a need for an apparatus ceiling mount that enables a higher speed of up and down movement.

### SUMMARY OF THE INVENTION

It is an object of the present invention to provide an apparatus ceiling mount that enables a higher speed of up and down movement.

The object is achieved by an apparatus ceiling mount according to claim 1.

The apparatus ceiling mount comprises a telescopic arm having an upper end part and a lower end part. The upper end part and lower end part are slideably coupled such that the length of the arm can be adjusted to the needs of the user. When a relatively large distance needs to be bridged the telescopic arm may include more parts than the upper end part and the lower and part. Each part is slideably coupled to its neighboring or adjacent part. For example, the telescopic arm may have three parts: the upper end part slideably coupled to an intermediate part which is slideably coupled to the lower end part. The upper end part is attachable to the ceiling of a room and a frame is coupled to the lower end part. An apparatus such as a monitor may be attached to the frame. The height of the monitor with respect to a user can be adjusted by changing the length of the telescopic arm. To enable an easy adjustment of the length of the telescopic arm with minimal effort for the user the apparatus ceiling mount comprises an adjustable constant force spring that with its force counterbalances the weight of the monitor or additional equipment or accessory that may have been attached to the frame. When the length of the telescopic arm is adjusted the cable will exert a force on the adjustable constant force spring which will act as a counterbalance for the gravity force acting on the apparatus attached to the frame and keep the apparatus in rest at a desired position to which it was moved by the user. The speed of the up and down movement is determined by the user. By using an adjustable constant force spring which acts as a counterbalance for the weight of the apparatus there is not much effort needed from the user to move the apparatus attached to frame up and down. The spring force is adjusted to the weight of the apparatus such as a monitor or additional equipment or accessory that is attached to the frame. Measurements have shown that the user can move with one arm the frame (and the apparatus attached to it) up with a maximal speed up of 260mm/s and down with a maximal speed down of 338 mm/s. With a motorized apparatus ceiling mount an average speed up of about 15 mm/s and an average speed down of about 17mm/s was measured.

The telescopic arm may comprise one or more intermediate parts slideably coupled between the upper end part and the lower end part. Depending on the ceiling height, the maximal length of the telescopic arm may need 3 or more parts. For example, the telescopic arm may comprise an intermediate part slideably coupled between the upper end part and the lower end part. The upper end part, the intermediate part and the lower end part are linear aligned with respect to each other. For example, when the apparatus ceiling mount is vertically arranged, the intermediate part is arranged to slide up and down with respect to the upper end part which is attached to the ceiling, and the lower end part is arranged to slide up and down with respect to the intermediate part.

In a first embodiment of the apparatus ceiling mount according to the independent claim, each part of the group of slideably coupled parts is hollow thereby creating a hollow extendable telescopic arm. In this embodiment of the apparatus ceiling mount the telescopic arm is hollow from the upper end part to the lower end part, including any intermediate part that may be included. This enables the cable and the adjustable constant force spring to be mounted inside the telescopic arm. This provides enhanced safety as the cable cannot be accidentally touched when moving the arm up and down.

In a second embodiment the apparatus ceiling mount further comprises a first pulley system for guiding the cable to the adjustable force spring. The adjustable constant force spring is positioned outside the upper end part. It may be coupled to the outside of the upper end part. The first pulley system is coupled to the upper end part and positioned inside the upper end part. The upper end part of the arm has an opening for passing through the cable to the adjustable constant force spring which is positioned outside the upper end part. This arrangement is advantageous for rooms with a low ceiling height in which it is desired to move the frame (to which a monitor may be attached) up to a relatively smaller distance from the ceiling.

In a third embodiment the apparatus ceiling mount further comprises a second pulley system coupled to the lower end part and positioned inside the lower end part. The cable is coupled with a first cable end to the upper end part of the telescopic arm and routed over the second pulley system to the first pulley system and before passing through the opening for coupling to the adjustable constant force spring. This arrangement provides the advantage that the force that needs to be balanced by the adjustable constant force spring is reduced.

Each pulley system may comprise a wheel rotatably mounted in a pulley frame. The cable is coupled with its first cable end to the upper end part of the telescopic arm and then is routed through to the wheel of the second pulley system which is coupled to the lower end part back to the wheel of the first pulley system which is coupled to the upper end part. Each pulley system may comprise more than one wheel, for example two or more wheels. The cable is looped several times between the wheels of the first and second pulley system before being coupled to the adjustable constant force spring. In case each pulley system comprises two wheels, the cable is routed to the first wheel of the second pulley system, looped back to the first wheel of the first pulley system and then to the second wheel of the second pulley system and then back to the second wheel of the first pulley system before the cable is coupled with the second cable end to a first end of the adjustable constant force spring. The second end of the constant force spring is coupled to the upper end part of the telescopic arm. By using pulley systems having more wheels a fraction of the weight of all equipment that is attached to the frame needs to be balanced by the adjustable constant force spring. For example, when the equipment attached to the frame has a weight of 180 kg and pulley systems with 10 wheels are used a constant force spring having a load bearing capacity of 18 kg may be selected.

In a fourth embodiment the apparatus ceiling mount further comprises a friction element arranged to provide a predetermined level of resistance to a wheel of the first or second pulley system when the wheel is rotating in response to an adjustment of the length of the telescopic arm. Each pulley system comprises a wheel that is rotatably mounted in a pulley frame. In this fourth embodiment the friction element pushes with a predetermined force against a wheel of the first or second pulley system. When the length of the telescopic arm is adjusted by moving the frame up or down the friction element provides a predetermined level of resistance to the rotating wheel. When the user stops pushing the frame (and the apparatus attached to it) up or down the friction element provides a 'braking force' to stop the up or down movement of the telescopic arm and to provide a stable equilibrium in which the length of the telescopic arm is fixed until an external force from the user pushes the frame up or down with a force larger than a predetermined threshold which is set by the friction element. The friction element prevents that when a relatively small additional accessory (e.g. with a weight of less than 3kg) is attached to the frame the constant force spring must be adjusted to maintain the static equilibrium. Examples of accessories that may be attached to the frame include a drip stand, waste basket or camera.

In a fifth embodiment, which can be combined with the apparatus ceiling mount defined in claim 1 or any of the previous discussed embodiments, the apparatus ceiling mount further comprises a further friction element. The further friction element has the same function as the friction element in the fourth embodiment but realizes the friction to achieve a stable equilibrium in a different way. In this fifth embodiment one part of a pair of adjacent slideably coupled parts being closest to the frame comprises a further moveable pin arranged to press with a predetermined force against a surface of the other part of the pair of adjacent slideably coupled parts. The further moveable pin provides resistance to a sliding movement of the one part relative to the other part. In an embodiment in which the telescopic arm has only a lower end part and an upper end part the lower end part comprises the further moveable pin that presses with a predetermined force against a surface of the upper end part.

In a sixth embodiment, which can be combined with any of the previous discussed embodiments, the apparatus ceiling mount further comprises a safety brake arranged for blocking a sliding movement of the lower end part relative to the upper end part in response to a drop of a tension in the cable. The drop of the cable tension may be caused for example by a breakage of the coupling of the cable to a part of the telescopic arm, breakage of the coupling of the cable to the adjustable constant force spring, a breakage of the cable itself, a breakage in a pulley system guiding the cable or a breakage of the adjustable force spring. The safety brake prevents that the frame to which equipment may have been attached drops down and hits an object or person positioned under the telescopic arm and present within the height range from the ceiling that may be bridged by the telescopic arm of the apparatus ceiling mount. When the cable tension drops (e.g. when a breakage of the cable occurs) the safety brake blocks the sliding movement of the lower end part relative to an adjacent slideably coupled part of the telescopic arm. When for example the telescopic arm comprises two parts the safety brake blocks the sliding movement of the lower end part relative to the upper end part. When the arm comprises more than the lower end part and the upper end part the safety brake may be arranged to block a sliding movement of a pair (or each pair) of adjacent slideably coupled parts with respect to each other in response to a drop of the cable tension (e.g. caused by a breakage of the cable). For example, when the arm comprises three parts, the lower end part, an intermediate part and the upper end part, the safety brake may be arranged to block the sliding movement of the lower end part relative to the intermediate part, or the sliding movement of the intermediate part relative to the upper end part or both.

In a seventh embodiment of the apparatus ceiling mount one part of the pair adjacent slideably coupled parts being closest to the frame comprises a moveable pin and the other part of the pair of adjacent slideably coupled parts has a toothed surface facing the pin, the pin being arranged to engage with the toothed surface in response to a drop of the cable tension (e.g. caused by a breakage of the cable). With a telescopic arm comprising only the upper end part and the lower end part these parts will be the pair of adjacent (or neighboring) parts. In this case of a telescopic arm with one pair of slideably coupled parts the lower end part is closest to the frame and the safety brake comprises a moveable pin that is coupled to the lower end part. The moveable pin is arranged to engage with the toothed surface of the upper end part in response to the drop of the cable tension.

When the telescopic arm comprises more parts, for example three parts, an intermediate part is slideably coupled between the upper end part and the lower end part. With three parts there are two pairs of adjacent slideably coupled parts: the upper end part and the intermediate part will be a first pair of adjacent slideably coupled parts, and the intermediate part and the lower end part will be a second pair of adjacent slideably coupled parts. The safety brake included in the apparatus ceiling mount is arranged to block a sliding movement of the slideably coupled parts of the first or second pair or both pairs. For a pair (or each pair) of adjacent slideably coupled parts, the safety brake may comprise a moveable pin that is coupled to the part of the pair which is closest to the frame. The moveable pin is arranged to engage with the toothed surface of the other part of the pair in response to a drop of the cable tension.

In an eighth embodiment the apparatus ceiling mount further comprises a rail attachable to the ceiling. The apparatus ceiling mount is slideably coupled to the rail. This provides the advantage that the user can move the frame and any accessory attached to the frame in a horizontal direction over the rail to a desired position.

In a nineth embodiment the apparatus ceiling mount comprises a monitor that is attached to the frame of the apparatus ceiling mount.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 and 2 show an example of an apparatus ceiling mount with a telescopic arm having three parts;
FIG. 3 shows example of an apparatus ceiling mount comprising an adjustable constant force spring;
FIG. 4 shows an example of an apparatus ceiling mount comprising a pulley systems;
FIG. 5 shows an example of a pulley system with a friction element;
FIG. 6 shows an example of an apparatus ceiling mount comprising a further friction element;
FIG. 7 shows an example of an apparatus ceiling mount comprising two pulley systems;
FIG. 8 shows an example of a cable routing between two pulley systems;
FIG. 9 shows an example of a safety brake included in an apparatus ceiling mount;
FIGs. 10 and 11 show details of an example of a safety brake;
FIG. 12 shows an example of an activated safety brake in an apparatus ceiling mount;
FIG. 13 shows an example of a safety brake in a telescopic arm having three parts.

### DETAILED DESCRIPTION OF THE EMBODIMENTS

The invention will be described with reference to the Figures.

The detailed description and specific examples, while indicating exemplary embodiments of the apparatus ceiling mount, are intended for purposes of illustration only and are not intended to limit the scope of the invention. These and other features, aspects, and advantages of the apparatus ceiling mount and its embodiments will become better understood from the following description, appended claims, and accompanying drawings. The Figures are merely schematic and are not drawn to scale. Also in some Figures only those features are shown that are needed to discuss a particular function (e.g. the safety brake) of an embodiment of the apparatus ceiling mount. It should also be understood that the same reference numerals are used throughout the Figures to indicate the same or similar parts.

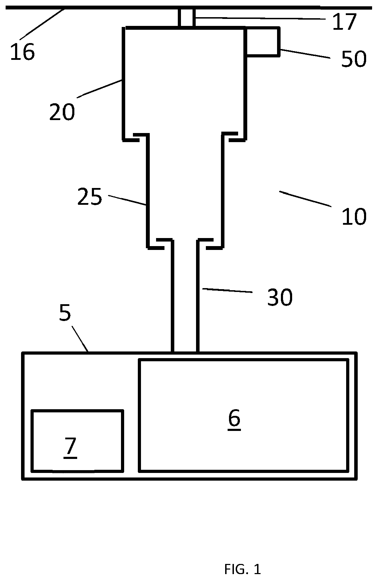

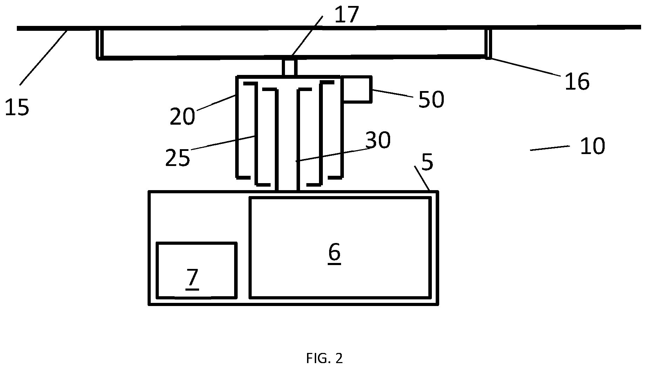

In a clinical environment like an interventional X-ray room, it may be required to mount a monitor with an apparatus ceiling mount to a ceiling. For an optimal viewing angle, the position of the monitor should be adjustable. Figs. 1 and 2 show an exemplary embodiment of an apparatus ceiling mount 10 with a telescopic arm having three parts. The apparatus ceiling mount comprises a frame 5 attached to the lower end of a telescopic arm having an adjustable length. The telescopic arm comprises three parts: an upper end part 20, a lower end part 30, and an intermediate part 25 between the upper end part and the lower end part. In Fig. 1 the arm is at a maximal length and in Fig. 2 at a minimal length. The length of the arm is adjustable by a user by pushing the frame 5 which is coupled to the lower end part up or down. When the length of the arm is adjusted the parts of the arm will slide with respect to each other: sliding in with respect to each other when moving the frame towards the ceiling 15 or sliding out with respect to each other when the frame is pushed downwards. The telescopic arm may have more than one intermediate part or no intermediate part. When there is no intermediate part the upper end part 20 and lower end part 30 will be adjacent (or neighboring) parts that are slideably coupled to each other. An apparatus such as a monitor 6 or a measurement device or other equipment or accessory 7 may be attached to the frame 5. The upper end part 20 may be rotatably coupled via pivoting element 17 to a rail 16 which is attachable to the ceiling as shown in Fig. 2. The pivoting element 17 enables the apparatus ceiling mount and thus the frame included in the apparatus ceiling mount to be rotated, for example to get a better viewing angle with respect to the monitor 6 that is attached to the frame. Also, the user can slide the apparatus ceiling mount over the rail 16 to improve the user's view on the monitor.

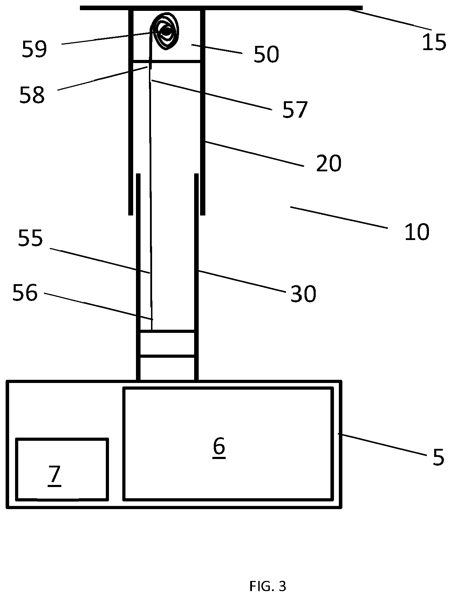

The apparatus ceiling mount further comprises an adjustable constant force spring 50 that is coupled to the upper end part 20. The constant force spring may be positioned inside the arm and coupled to the upper end part 20 as shown in Fig. 3 or outside the arm and coupled to the upper end part as shown in Figs 1 and 2. In rooms with a relatively low ceiling height it is advantageous to position the adjustable constant force spring outside the telescopic arm such that the frame 5 can be positioned at a smaller distance from the ceiling 15 as schematically depicted in Fig. 2. The adjustable constant force of the spring acts as a counterbalance for the gravity acting on the frame 5 and all equipment attached to it. Or, put differently, the constant force spring provides a counterbalance for the weight of all equipment that is attached to the frame. When the user changes the equipment or accessory 7 that is attached to the frame 5 the weight of the equipment or accessory attached to the frame may change. The adjustable constant force spring may need to be adjusted to maintain a static equilibrium in which the length of the telescopic arm does not change when the user does not move the frame 5 up or down.

Adjustable constant force springs are known in the art. An adjustable constant force spring may for example comprise a pre-stressed flat strip of spring material which is formed into virtually constant radius coils on a drum as schematically shown in Fig. 3. Fig. 3 shows more details of an exemplary embodiment of an apparatus ceiling mount 10 and is used to explain how the constant force spring acts as counterbalance. The apparatus ceiling mount 10 shown in Fig. 3 has a telescopic arm comprising a lower end part 30 to which a frame 5 is attached and an upper end part 20 coupled to a ceiling 15. The parts 30, 20 of the arm are hollow. A cable 55 coupled with its first cable end 56 to the lower end part 30 is routed to the upper end part and coupled with its second cable end 57 to the second spring end 58 of the adjustable constant force spring. The first spring end 59 is coupled to the upper end part. The constant force of the spring 50 should be adjusted to a value at which the length of the arm does not change unless when a user pushes the frame 5 up or pulls it down. Moving up or down does not require a lot of effort of the user since the constant force of the constant force spring acts as a counterbalance for the weight of the monitor 6 and equipment or accessory 7 attached to the frame 5. The gravity force acting on the apparatus is counteracted in value and direction by the force provided through the cable 55 by the adjustable constant force spring.

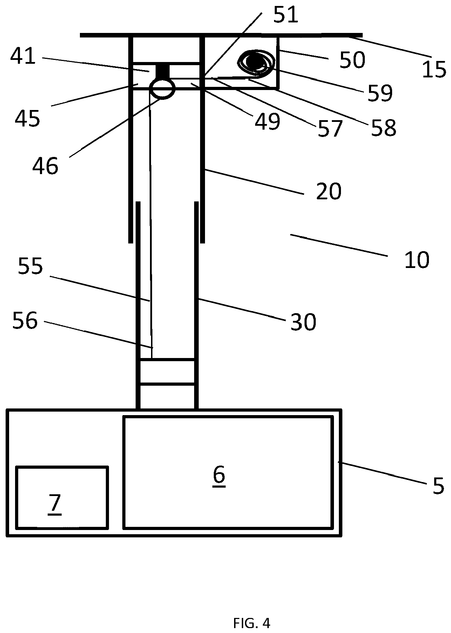

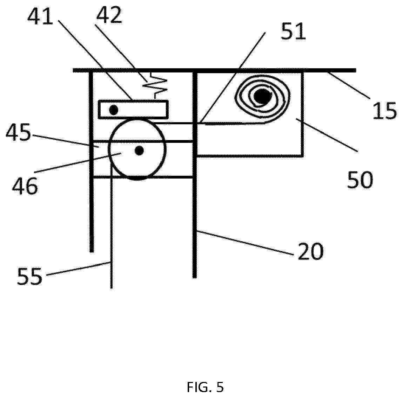

Fig. 4 shows an exemplary embodiment of an apparatus ceiling mount 10 comprising a first pulley system 45. The first pulley system comprises a wheel 46 rotatably mounted in a pulley frame 49. The pulley frame is coupled to the inside of the upper end part 20. The wheel 46 of the pulley system guides the cable 55 through an opening 51 in the upper end part 20 to the adjustable constant force spring 50. The cable is coupled with a first cable end 56 to the lower end part 30 and a second cable end 49 to the second spring end of constant force spring 59. The adjustable constant force spring 50 is positioned outside the telescopic arm to enable a positioning of the monitor 6 closer to the ceiling 15. For safety it is preferred to have the cable and the first pulley system 45 inside the telescopic arm so that these cannot be touched. Further the apparatus ceiling mount may comprise a friction element 41 that acts as a brake for the rotating wheel. This will be explained in more detail in Fig. 5.

Fig. 5 shows an exemplary embodiment of a pulley system with a friction element 41. The friction element 41 pushes with a predetermined force against a wheel 46 or multiple wheels of the first pulley system 45. The friction element 41 is used to bring the telescopic arm faster to a stable rest position or static equilibrium after it has been moved up or down by the user. The friction element also prevents the static equilibrium from being lost due to tolerances in the mechanical components of the monitor ceiling mount. The friction element is further used to provide a predetermined weight range of all equipment attached to the frame for which the static equilibrium will be maintained. This prevents the static equilibrium will be lost with small changes in the weight of the attached equipment or accessories (e.g. by an adding cable to a measurement device that is attached to the frame). For example, the predetermined force of the friction element 41 may be dimensioned to obtain a static equilibrium for a total weight of monitor and equipment attached to the frame 5 in the weight range of 180kg to 185kg. The friction element may be acting on one wheel or several wheels of the pulley system. Or, the pulley system may have an additional wheel, not used for guiding the cable 55, on which the friction element pushes with a predetermined force. The predetermined force may be set with a compressed spring 42 pushing the friction element 41 against the one or more wheels 46. The predetermined force causes a predetermined resistance to a wheel that will rotate when the length of the telescopic arm is adjusted by the user.

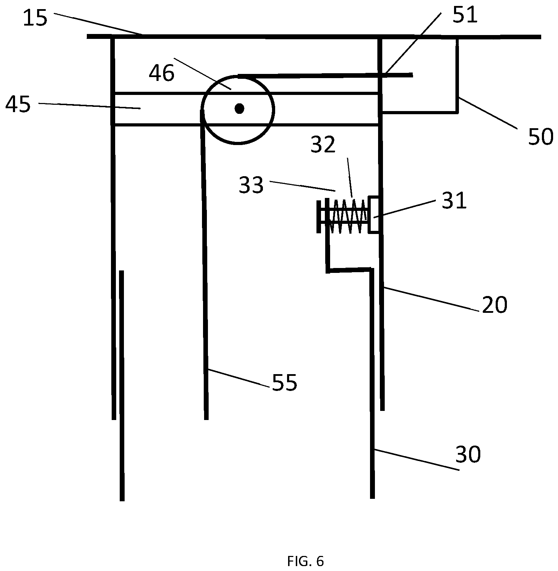

Fig. 6 shows a portion of an exemplary embodiment of a monitor ceiling mount with a further friction element 33. The further friction element 33 has the same function as the friction element 41 in Fig. 5 discussed earlier, that is, to create a weight range for which a static equilibrium is obtained. The constant force spring may have been adjusted to have a static equilibrium for a total weight of attached equipment, monitor and accessories of 180kg. To prevent that the addition of a relatively small accessory (e.g. a drip stand) would require an adjustment of the constant force spring the friction element 33 is added to maintain the equilibrium as long as the weight change of the total weight is limited to (for example) maximal 5kg. One part 30 of a pair of adjacent slideably coupled parts 30, 20 being closest to the frame (not shown in Fig. 6) comprises a further moveable pin 33 arranged to press or push its end 31 with a predetermined force against a surface of the other part 20 of the pair of adjacent slideably coupled parts. The further moveable pin 33 is arranged to provide a resistance to a sliding movement of the two adjacent parts relative to each other. A compressed spring 32 may be used to provide the predetermined force. For example, the telescopic arm of the apparatus ceiling mount may have an upper end part 20, an intermediate part 25 and a lower end part 30 as shown in Fig. 1. The pair of adjacent slideably coupled parts may be the lower end part and the intermediate part. In that case the lower end part is closest to the frame 5 and comprises the further moveable pin that presses with the predetermined force against the surface of the intermediate part. Alternatively, the intermediate part and the upper end part are the pair of adjacent slideably coupled parts. In this case the intermediate part is closest to the frame and comprises the moveable pin that presses with the predetermined force against the surface of the upper end part that is facing the moveable pin.

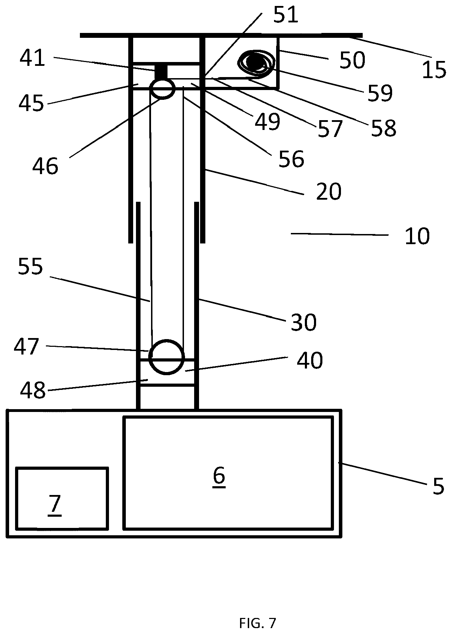

Fig. 7 shows an exemplary embodiment of an apparatus ceiling mount 10 comprising a first and a second pulley system 45, 40. The first pulley system 45 is coupled to the upper end part 20 and the second pulley system 40 is coupled to the lower end part 30. Each pulley system has at least one wheel 46, 47 that is rotatably mounted in a pulley frame 49, 48. A cable 55 is coupled with a first cable end 56 to the pulley frame 49 that is coupled to the upper end part 20. Alternatively, the first cable end may be connected to the upper end part. The cable is routed to the wheel 47 of the second pulley system 40 and from there back to the wheel 46 of the first pulley system 45 and next via an opening 51 in the upper end part leaving the telescopic arm to be coupled with the second cable end 57 to the second spring end 58 of the adjustable constant force spring 50. The first spring end 59 is coupled to the upper end part. When the length of the telescopic arm is adjusted the wheels of the pulley system rotate as the cable moves guided by the wheels. For safety it is preferred to have the cable 55 and pulley systems 45, 40 inside the telescopic arm so that these cannot be accidentally touched by the user. The first and second pulley system 45, 40 may comprise 2 or more wheels 46, 47 for guiding the cable 55 from the upper end part 20 via the second and first pulley system to the constant force spring 50 whereby the cable 55 is looped one or more times between the first and second pulley system. For example, when each pulley system is equipped with two wheels, the cable, which is coupled with the first cable end 56 to the upper end part 20, may be routed from the upper end part to a first wheel from the second pulley system 40 and back to a first wheel of the first pulley system 45, then to a second wheel of the second pulley system and from there back to a second wheel of the first pulley system after which the second cable end 57 is connected to the second spring end 58 of the constant force spring. The advantage of this arrangement of pulley systems is that a fraction of the weight of all equipment that is attached to the frame 5 needs to be balanced by the adjustable constant force spring, which provides a cost advantage. For example, when the equipment attached to the frame has a weight of 180 kg and pulley systems with 10 wheels are used a constant force spring having a load bearing capacity of 18 kg may be selected.

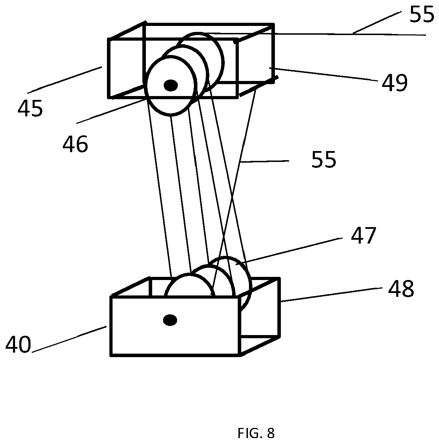

Fig. 8 shows an exemplary embodiment of a cable routing between the two pulley systems 40, 45 mounted in the telescopic arm. In an embodiment of the apparatus ceiling mount each of the pulley systems 45, 40 comprises three wheels 46, 47 as shown in Fig. 8. The cable 55 is coupled with the first cable end to the pulley frame 49 of the first pulley system 45 and routed to the first wheel of the second pulley system 40, looped back to the first wheel of the first pulley system 45, next looped back to the second wheel of the second pulley system 40, looped back to the second wheel of the first pulley system 45, then looped back to the third wheel of the second pulley system 40 and from there to the third wheel of the first pulley system to be connected to the adjustable constant force spring (not shown in Fig. 8). The use of the first and second pulley systems 45, 40 reduces the force exerted on the spring. As the weight of the equipment attached to the frame can be 180 kg or more the force that needs to be counterbalanced by the adjustable constant force spring can be quite high and increase the cost of the spring when no pulley systems would be used.

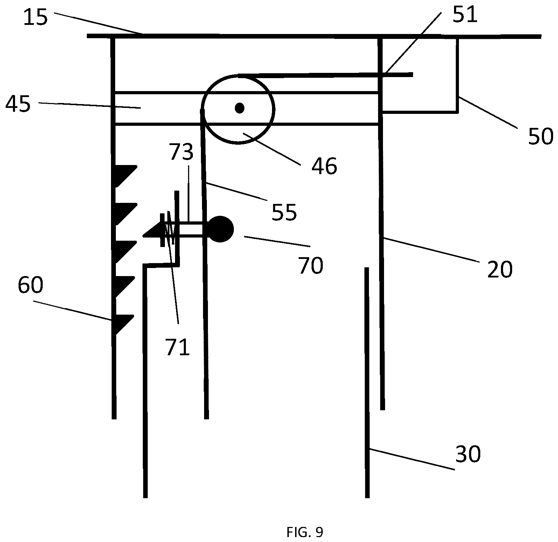

Fig. 9 shows an exemplary embodiment of a safety brake 70 included in an apparatus ceiling mount. The safety brake 70 prevents that an object or person positioned below the frame is impacted in case the cable 55 tension for unforeseen reason drops, for example due to a break in the cable itself, or its coupling to the upper end part or lower end part, or its coupling to the adjustable constant force spring, or a break in a pulley system guiding the cable or a break in the constant force spring itself. The constant force spring acts on the cable causing the cable 55 to be under a tension. A breakage in cable 55, pulley system 45 or constant force spring 50 causes a drop in the tension of the cable. The safety brake 70 will block a sliding movement of the lower end part 30 relative to the upper end part 20 of the telescopic arm when the cable tension is lost.

The safety brake comprises a moveable pin 73 coupled to the lower end part 30 of the telescopic arm. When the tension of the cable suddenly drops, for example caused by a breakage of the cable 55, the pin is pushed towards a toothed surface 60 on the inside of the upper end part 20. The pin will engage with the toothed surface 60 that is facing the pin and is "caught" between two teeth such that the lower end part 30 can't slide out of the upper end part 20.

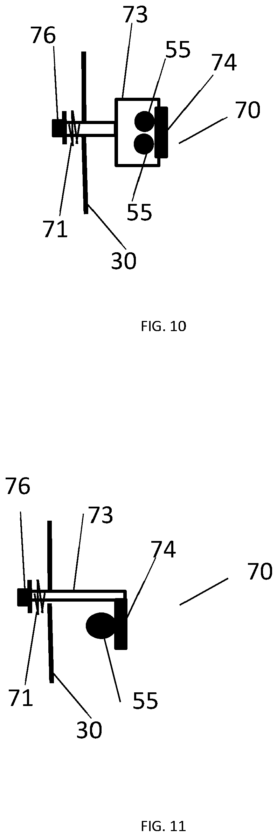

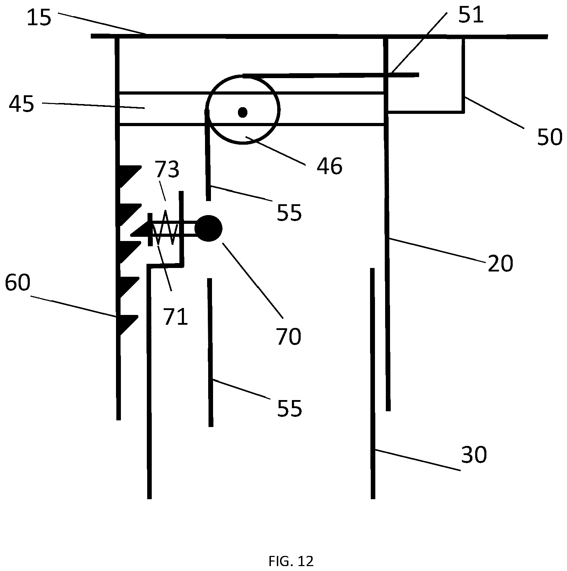

Figs. 10 and 11 show details of an exemplary embodiment of a safety brake using the moveable pin 73, now from a top view instead of the side view shown in Fig. 9. Fig. 10 shows an embodiment of the moveable pin 73 having a "loop" at one end 74 through which the cable 55 is routed. In Fig. 10 the "loop" is rectangular shaped and the cable 55 is routed twice through the opening. In case pulley systems with multiple wheels are used the cable 55 may be routed several times between the lower end part and the upper end part as is explained earlier when discussing Fig. 8. When the cable 55 breaks the pin 73 is released and the spring 71 forces the other end 76 of the pin towards the toothed surface 60 as shown in Figs 9 and 12. Fig. 11 shows another embodiment of the moveable pin 73 with a wheel at one end 74. The cable 55 is positioned between the wheel and the lower end part 30 of the telescopic arm (not shown in Fig. 11). When the cable breaks, the spring 71 forces the pin 73 to move towards the lower end part 30. The other end 76 of the pin moves towards the toothed surface 60 (not shown in Fig. 10 and 11) of the upper end part that is facing the other end 76 of the pin 73 to prevent that the lower end part 30 slides out of the upper end part 20.

Fig. 12 shows an exemplary embodiment of an activated safety brake in an apparatus ceiling mount. The cable 55 is broken releasing the moveable pin 73. The compressed spring 71 forces the other end 76 of the pin towards the toothed surface 60 where it will be caught between two adjacent teeth such that the lower end part 30 can't slide out of the upper end part 20.

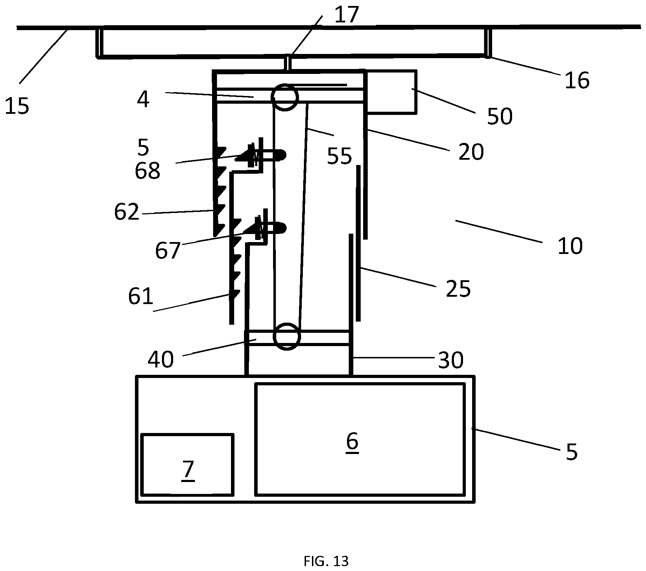

Fig. 13 shows an exemplary embodiment of a safety brake in a telescopic arm having three parts: a lower end part 30, an intermediate part 25 and an upper end part 20. Each part is slideably coupled with its adjacent (or neighboring) part. In this telescopic arm there are two pairs of adjacent parts: the lower end part 30 and the intermediate part 25 are a first pair of adjacent parts and the intermediate part 25 and the upper end part 20 are a second pair of adjacent parts. The safety brake is arranged to block a sliding movement of the parts of a pair of adjacent slideably coupled parts with respect to each other in response to a drop in the cable tension (e.g. caused by a breakage of the cable 55). When for example the cable 55 breaks the lower end part 30 is blocked from sliding out of the intermediate part 25 and the intermediate part 25 is blocked from sliding out the upper end part 20.

In Fig. 13 a first part 30 of the first pair adjacent slideably coupled parts 30, 25 being closest to the frame 5 comprises a first moveable pin 67 and the second part 25 of the first pair of adjacent slideably coupled parts has a first toothed surface 61 on its inner surface facing the first pin, the first pin being arranged to engage with the toothed surface 61 in response to a drop of the cable tension (e.g. caused by a breakage of the cable 55) to prevent that the first part 30 of the first pair of adjacent coupled parts slides out of the second part 25 of the first pair of adjacent coupled parts. Further, a first part 25 of the second pair adjacent slideably coupled parts 25, 20 being closest to the frame 5 comprises a second moveable pin 68 and the second part 20 of the second pair of adjacent slideably coupled parts has a second toothed surface 62 on its inner surface facing the second pin 68, the second pin being arranged to engage with the second toothed surface 62 in response to a drop of the cable tension (e.g. caused by a breakage of the cable 55) to prevent that the first part 25 of the second pair slides out of the second part 20 of the second pair of adjacent slideably coupled parts.

While the invention has been illustrated and described in detail in the drawings and foregoing description, such illustration and description are to be considered illustrative or exemplary and not restrictive. Features of discussed embodiments may be combined. For example, the safety brake discussed and shown in Fig. 9 may be combined with the apparatus ceiling mount discussed and shown in Fig 3, Fig. 4 or Fig. 7. As another example, the friction element 41 acting on the wheel 46 of the first pulley system 45 shown in Fig. 5 may also be combined with the second pulley system 40 and acting on the wheel 47 of the second pulley system shown in Fig. 7 or any of the wheels 46, 47 of the arrangement of pulley systems shown in Fig. 8. As another example, the further friction element 33 shown in Fig. 6 may be used in the apparatus ceiling mount shown in Figs. 1, 2, 3, 4, 7, 9, 12 or 13.

## Claims

1. An apparatus ceiling mount (10) comprising
a telescopic arm having an adjustable length, the arm comprising a group of slideably coupled parts, the group comprising at least an upper end part (20) and a lower end part (30), the upper end part being slideably coupled to the lower end part of the arm, the upper end part being attachable to a ceiling (15);
a frame (5) coupled to the lower end part, the frame being arranged for attaching an apparatus (6,7) thereto;
a cable (55), the cable having a first cable end (56) and a second cable end (57), the first cable end being coupled to the lower end part;
an adjustable constant force spring (50) having a first spring end (59) being coupled to the upper end part and a second spring end (58) being coupled to the second cable end, wherein the force provided by the adjustable constant spring counterbalances the gravity force acting on the apparatus (6,7).

2. The apparatus ceiling mount (10) of claim 1 wherein each part of the group of the slideably coupled parts is hollow thereby creating a hollow extendable telescopic arm and wherein the cable (55) is routed inside the telescopic arm.

3. The apparatus ceiling mount (10) of claim 2 further comprising a first pulley system (45) for guiding the cable (55) to the adjustable force spring (50), the first pulley system being coupled to the upper end part and positioned inside the upper end part (20), wherein the upper end part (20) of the arm has an opening (51) for passing through the cable (55) to the adjustable constant force spring (50) positioned outside the upper end part.

4. The apparatus ceiling mount (10) of claim 3 further comprising a second pulley system (40) coupled to the lower end part (30) and positioned inside the lower end part, wherein the cable (55) is coupled with the first cable end (56) to the upper end part of the telescopic arm and routed via the second pulley system (40) to the first pulley system before passing through the opening (51) for coupling to the adjustable constant force spring (50).

5. The apparatus ceiling mount (10) of claim 3 or 4 wherein the pulley system (40, 45) comprises a wheel (47, 46) rotatably mounted in a frame (48, 49), the apparatus ceiling mount further comprising a friction element (41) arranged to provide a predetermined level of resistance to the wheel (46, 47) when the wheel is rotating in response to an adjustment of the length of the telescopic arm.

6. The apparatus ceiling mount (10) of anyone of claims 1 to 5 wherein the group of slideably coupled parts comprises a pair of adjacent slideably coupled parts, one part (30) of the pair of adjacent slideably coupled parts (30, 20) being closest to the frame (5) comprising a further moveable pin (33) arranged to press with a predetermined force against a surface of the other part (20) of the pair of adjacent slideably coupled parts to provide resistance to a sliding movement of the one part relative to the other part.

7. The apparatus ceiling mount (10) of any of claims 1 to 6 comprising a safety brake (70), arranged for blocking a sliding movement of the lower end part (30) relative to the upper end part (20) in response to a drop of cable (55) tension.

8. The apparatus ceiling mount (10) of claim 7 wherein the safety brake is arranged to block a sliding movement of a pair of adjacent slideably coupled parts with respect to each other in response to the drop of cable (55) tension.

9. The apparatus ceiling mount (10) of claim 8 wherein one part (30) of the pair of adjacent slideably coupled parts (30, 20) being closest to the frame (5) comprises a moveable pin (73) and the other part (20) of the pair of adjacent slideably coupled parts has a toothed surface (60) facing the pin, the pin being arranged to engage with the toothed surface (60) in response to the drop cable (55) tension.

10. The apparatus ceiling mount (10) of anyone of claims 1 to 9 comprising a rail (16) attachable to the ceiling (15).

11. The apparatus ceiling mount (10) of anyone of claims 1 to 10 further comprising a monitor (6) attached to the frame (5) of the apparatus ceiling mount (10).
